# EUROPEAN PATENT APPLICATION

(11) **EP 4 717 372 A1**
(43) Date of publication of application: **01.04.2026**
(21) Application number: 24202612.8
(22) Date of filing: 25.09.2024
(51) Int. Cl.: B21C 23/08, B21C 23/20, B21C 23/22, B21C 25/02, B21C 31/00, B21C 33/00, B21F 45/00

(54) **EXTRUSION METHOD AND APPARATUS**

(71) Applicant: Helmholtz-Zentrum hereon GmbH, 21502 Geesthacht (DE)
(72) Inventor: Suhuddin, Uceu Fuad Hasan, 21502 Geesthacht (DE); Rath, Lars, 25361 Krempe (DE); Chan, Chang Yin-Cheng, 21502 Geesthacht (DE); Klusemann, Benjamin, 21382 Brietlingen (DE)
(74) Representative: Bird & Bird LLP - Hamburg

(57) **Abstract**

Disclosed is an extrusion method for forming a length of multimaterial extrudate, the method comprising providing a die (no) comprising a longitudinal axis (112); providing a container (102) comprising a multimaterial feed material supply (104) comprising at least two materials (104a, 104b), the die (no) and the container (102) being configured such that the container (102) is rotatable relative to the die (no) about a rotation axis (108); aligning the longitudinal axis (112) of the die (no) so as to be coincident with the rotation axis (108); rotating the container (102) relative to the die (no) about the rotation axis (108); effecting relative movement of the container (102) towards the die (no) so as to bring an axial surface of the die (no) into contact with a rotating engagement surface (120) of the supply of feed material (104); generating heat at the interface between the axial surface of the die (no) and the rotating engagement surface (120) of the multimaterial feed material supply (104) so as to heat the at least two materials of the multimaterial feed material supply (104) by the application of a contact pressure between the axial surface of the die (no) and the rotating engagement surface (120) of the feed material supply (104) so as to generate friction therebetween; pressing the heated multimaterial feed material supply (104) through an orifice (122) in the axial surface of the die (no) and into an extrusion channel (124) in the die (no) so as to form a length of multimaterial extrudate in the extrusion channel (124).

## Description

The present invention relates to an extrusion method for forming a length of multimaterial extrudate.

The extrusion of components is a widely used manufacturing process in many industries. In industry, a feedstock of extrudable material (for example of metal or polymer) may be used in order to produce a length of material, such as a wire or support rod. Many techniques and processes exist today for the transformation of a feedstock into an extruded form, such as a wire or rod.

In many cases, it is desirable to produce extrudates that comprise two materials, such as bi-metallic extrudates, which may have properties that are preferable as compared to single material extrudates. For example, a bi-metallic extrudate may comprise a relatively easily corroded material encased in a material that is less easily corroded, or may comprise a relatively weak material encased in a relatively strong one. In doing so, the benefits of the material properties of both materials may be taken advantage of.

Several techniques are known to produce bi-metallic extrudates. For example metal drawing or wire drawing involves the insertion of a section of feedstock material into a die, before the feedstock material is pulled, or drawn, through the die to produce an extrudate. In order to provide the required deformability of the feedstock material, an external heat source is required to heat the feedstock material before being drawn.

A bi-metallic extrudate may alternatively be formed through the known processes of rolling or cladding. However, both of these processes also require an external heat source. In addition, each of the aforementioned processes require the use of more than one process to complete - for example a heating process and a drawing process, a drawing process and a melting process, or the like. This therefore not only creates a need for an external heat source, but it makes each of these known methods more complex and reduces the efficiency of each.

Friction extrusion is a known solid-state process that uses a non-consumable die to produce lengths of extruded material (which may be termed "extrudates"). The process has been used to produce solid extrudates, as well as hollow structures with different shapes.

However, due to the use of friction to provide a heat source, this method requires the presence of parts that move relative to the feedstock material. This can have the effect of causing unwanted deformation of the material in the feedstock, which may lead to an unknown or inconsistent cross-sectional arrangement of each material in the extrudate. Known friction extrusion methods are therefore not adequate to provide multimaterial extrudate. Therefore, while this process may permit the formation of an extrudate without requiring the use of more than one distinct process, it does not currently provide a solution in the case of multimaterial extrudates.

It is therefore an object of the present invention to provide an extrusion method for forming a length of multimaterial extrudate that is reduced in complexity and increased in efficiency in comparison to known processes.

A first aspect of the invention relates to an extrusion method for forming a length of multimaterial extrudate. The method comprises providing a die comprising a longitudinal axis, and providing a container comprising a multimaterial feed material supply comprising at least two materials. According to the first aspect, the die and the container are configured such that the container is rotatable relative to the die about a rotation axis, and the method comprises aligning the longitudinal axis of the die so as to be coincident with the rotation axis.

In this regard, it is to be noted that relative rotation between the container and the die may be obtained by rotating only the container with the die being stationary or vice versa. Furthermore, it is also conceivable that both the container and the die are rotationally driven to achieve the desired relative rotation.

The method comprises rotating the container relative to the die about the rotation axis, and relatively moving the container towards the die so as to bring an axial surface of the die into contact with an engagement surface of the supply of multimaterial feed material supply. The method further comprises generating heat at the interface between the axial surface of the die and the rotating engagement surface of the feed material supply so as to heat the at least two materials of the multimaterial feed material supply by the application of a contact pressure between the axial surface of the die and the rotating engagement surface of the feed material supply so as to generate friction therebetween, and pressing the heated multimaterial feed material supply through an orifice in the axial surface of the die and into an extrusion channel in the die so as to form a length of multimaterial extrudate in the extrusion channel.

The multimaterial extrusion of similar and dissimilar metals/alloys of different feedstock via friction extrusion provides an energy, time and cost-efficient process. Multimaterial friction extrusion eliminates the need for multi-stage processing, pre-heating or excessive post-processing by utilising friction-based heating to plasticise, bond and extrude all or selected feedstock components depending on processing temperature. Control of the achieved microstructure of the resulting multimaterial extrudate is obtained by varying the parameters of the process, namely the rotational speed of the relative rotation between the container and the die, the speed of the relative movement of the container towards the die, the axial pressure applied between the die and the container, the thickness or diameter of the extrudate produced and the applied extrusion ratio allow so that tailored extrudates can be produced and the method of the invention provides a new option for cladding, joining or multi-alloy integration in existing applications of high performance extrudates by purpose of mechanical, chemical or electrical optimisation. Finally, downsizing of the feedstock cross-section is also possible when the aforementioned parameters are properly chosen.

Here, the term multimaterial is to be understood as relating to two distinct materials that are present in the feed material supply. For example, a feed material comprising two different metals (e.g. copper and aluminium) may be considered to be a multimaterial feed material. Equally, a feed material comprising two different alloys, or a metal and an alloy, may be considered to be a multimaterial feed material supply. In contrast, a multimaterial feed material comprising only an alloy of copper and iron would not be considered a multimaterial feed material, since only an alloy of copper and iron would be present, which does not comprise two distinct materials having distinct material properties, but one alloy of two elements (in this case metals) having the same material properties throughout the volume of the material.

The multimaterial feed material supply may therefore comprise two metals, such as aluminium and copper, or may comprise an alloy and a metal such as copper and steel, or two alloys, such as steel and a copper alloy, two dissimilar aluminium alloys, or the like. It should be understood that the present disclosure is not limited to use with metal and alloys and may, for example, be additionally used to provide polymer extrudates, in which case the multimaterial feed material supply may comprise a first and a second polymer.

The multimaterial feed material supply may be or comprise a single volume of material, i.e. the at least two materials may be provided held together (e.g. fused or bonded together) in some way. Alternatively, the multimaterial feed supply may be or comprise multiple volumes that may be arranged together, but that may not necessarily be fused or bonded together. For example, the multimaterial feed material supply may comprise a first material in the form of a cylinder and a second material in the form of a sleeve that is arranged around the cylinder. The cylinder may be bonded to the sleeve so as to form a single volume of material that cannot be disassembled easily (e.g. by hand, without the use of tools), or may be two volumes of material that arranged together but that are not fused or bonded together in any way. For example, a solid cylinder placed inside a solid sleeve of material, or a volume of a first material provided as a powder arranged into the form of a cylinder, and a first material provided as a powder, solid material, material chips, or the like, arranged in the form of a sleeve around the cylinder. The first and second volumes may therefore take any appropriate form, whether that form be in the form of a solid block of material, a powder, material chips, or the like.

It is preferred that the method comprises providing further relative movement of the container in the direction towards the die so as to force the heated multimaterial feed material supply through the extrusion channel. The method may comprise providing a cylindrical container comprising a multimaterial feed material supply located in a cylindrical cavity, and moving the container towards the die such that the die is positioned at least partially inside the cylindrical cavity, so that the die closes the opening of the cyof the container.

For example, the container may comprise a cavity in which the feed material supply may be located, with a container opening for providing access to the cavity. The method may comprise providing relative movement between the container and the die so as to locate the die at least partially inside the cavity and to close the opening. The method may comprise moving the die further through the container opening so as to locate a larger portion of the die inside the cavity in the container. In moving the die further into the container, heated feed material (e.g. that has become plasticised or semi-fluid as a result of the heating) may be forced through the opening in the die, and into the extrusion channel, thereby facilitating the forming of a multimaterial extrudate, and at the same time providing the necessary friction between the feed material and the die, without requiring any additional processes.

The container may also be or comprise a prismatic or substantially prismatic shape. For example, the container may be in the shape of a cylinder, a rectangular prism, a polygonal prism, or the like. The container opening may be provided in an axial surface of the container. The container opening towards the cavity may have a circular cross-section, as may the cavity in the container. As such, the container may be shaped so as to be gripped by a device which may be used to rotate the container. The opening may have a cross-section that maintains a constant shape despite rotation of the container. The opening may therefore have a circular cross-section that is located transverse to the rotation axis such that the shape of the cross-section remains constant despite turning of the container.

The engagement surface of the die may be substantially circular in cross-section and the diameter of the cylindrical cavity may be the same as the diameter of the outer surface of the engagement surface of the die. The engagement surface of the die may be flat (e.g. located in a single plane) and may be oriented perpendicular to the rotational axis of the container. Alternatively, the engagement surface may be sloped (e.g. located at an oblique angle relative to the rotation axis of the container). In some examples, the engagement surface may be conical or frustum-conical in shape, either protruding in the direction of the longitudinal axis of the die away from the die, or into the die.

Preferably the extrusion channel comprises an orifice arranged in axial surface of the die and at least the orifice is located on the longitudinal axis of the die. More preferably, even the extrusion channel extends at least partially along the longitudinal axis. Such configuration of the die further reduces the radial deformation at least in the center portion of the feed material supply and hence any pressure related negative effects on the microstructure of the feed material supply. However, it also conceivable that the orifice and/or at least portions of the extrusion channel are offset relative to the longitudinal axis and, hence, eccentric relative thereto.

The method may comprise providing the multimaterial feed material supply in the container, and aligning the multimaterial feed material supply with the rotation axis such that the arrangement of at least two materials in the multimaterial feed material supply is rotationally symmetrical about the rotation axis. The multimaterial feed material supply may have the same shape of the cavity in the container, or part of the cavity in the container. The shape of the feed material supply may be defined by the shape of the material in the container, for example in the case where the feed material supply is or comprises a powder. The shape of the feed material may be in the form of a cylinder, thus maintaining a constant cross section as the container is rotated. The shape of the feed material may be in the form of a cylinder and at least one outer sleeve positioned around the cylinder (e.g. one, two, three or more outer sleeves). The cylinder and each of the at least one sleeve may be concentric, and as such the feed material may be rotationally symmetrical about the axis of rotation of the container.

The container comprising a multimaterial feed material supply comprising at least two metals and/or metal alloys. The method may comprise providing a container comprising a multimaterial feed material supply comprising copper as a first material and aluminium as a second material. As such, the method may then be used to provide an extrudate comprising two alloys, two metals, one metal and one alloy, or the like. Further, it is also conceivable that at least one of the two materials is a polymer, so that the extrudate comprises at least one polymer. The method may be adapted to provide an extrudate of any two metal choices of the user provided that the metal or metal alloys are able to be plasticised by frictional heat, and therefore may be highly formable.

The method may comprise rotating the container about the rotation axis relative to the die at a rotational speed of at least 90 rpm.

The extrusion method according to any preceding claim, wherein the contact force for the generation of heat is at least 100 kN and preferably at least 150 kN. Further, the contact force may be in the range between 100 and 700 KN, preferably between 100 and 500 kN, between 150 and 400 kN or between 350 and 700 kN. In particular, for Al typical forces are around 100-500 kN, for Mg 150-400 kN and for Cu 350-700 kN. These values apply particularly for the case that the container cavity has a cross section of 0.002 m², e.g. when the cavity in the container has an opening which is circular and has a diameter of 50 mm. Hence, based on the aforementioned force values pressure values can be derived and the pressure at the container opening/inner container is at least 5.1 GPa MPa and preferably 7.6.5 GPaMPa. Further, the contact pressure at the orifice opening may be in the range between 5.1 and 35.7 MGPa, preferably between 5.1 and 25.5 GPaMPa, between 7.6.5 and 20.4 GPa MPa or between 17.9 and 35.7 GPaMPa. In particular, for Al typical pressures are around 5.1-25.5 GPaMPa, for Mg 7.6.5-20.4 GPa MPa and for Cu 17.9-35.7 GPaMPa.

The method may comprise producing an extrudate (e.g. a bi-metallic extrudate, or poly-metallic extrudate) with a coarse grain structure towards the centre of the volume of the extrudate, while having a finer grain structure towards the periphery of the extrudate. In doing so, the deformation (e.g. the radial deformation) of the material of the extrudate during the extrusion process may be reduced, which is an important aspect of the present invention, such that the arrangement of the materials of the extrudate in cross-section is similar or the same as the arrangement of materials of the feed material.

The method may comprise plasticising a portion of the feed material supply at the engagement surface thereof by the generation of heat at the interface between the axial surface of the die and the rotating engagement surface due to friction, and may comprise flowing the plasticised portion of the feed material supply through the extrusion channel to form a length of multimaterial extrudate. As the material plasticises, the plasticised material may flow into the extrusion channel, where it may cool down to form an extrudate. Simultaneously, the movement of the plasticised material may permit the die to move further into the cavity in the container (e.g. away from the opening in the container), thereby permitting plasticisation of a further portion of the feed material and increasing the length of the extrudate. The engagement surface of the feed material with the die may therefore be considered to be a dynamic surface, which is being replaced by non-plasticised material as the plasticised material moves towards the opening in the die.

The arrangement of the at least two materials in the cross-section of the formed length of multimaterial extrudate may be the same as, or similar to, the arrangement of the at least two materials in the transverse cross-section of the multimaterial feed material supply in the container. For example, the geometry of the two materials may be the same or similar, but to a smaller scale. The ratio of dimensions between the cross-section of the feed material and the cross-section of the extrudate may be similar or the same. In particular, the ratio between the radial thickness of the two materials in the multimaterial feed material supply and in the multimaterial extrudate is essentially equal.

A second aspect relates to an apparatus for providing a length of multimaterial extrudate. The multimaterial extrudate comprises a die comprising a longitudinal axis and an axial surface comprising an orifice to an extrusion channel therein, as well as a container comprising a multimaterial feed material supply comprising at least two materials. The container and the die are rotatable relative to each other about a rotation axis. The longitudinal axis of the die and the rotation axis of the container are aligned so as to be coincident.

Hence, the container and/or the die are rotatable about the rotation axis, so that a relative rotation between the die and the container may be generated, and at least one of the die and the container are movable along the respective longitudinal axis and rotation axis so as to permit the axial surface of the die to be brought into contact with an engagement surface of the feed material supply, and the relative rotation between the container and the die causes rotation of the engagement surface and, hence, friction between the engagement surface of the feed material supply and the axial surface of the die, such that contact with the axial surface of the die causes heating of the engagement surface, and the opening in the axial surface of the die is configured to permit flow of heated multimaterial feed material supply therethrough and into the extrusion channel.

In some examples, the entry orifice of the extrusion channel may be parallel and/or coincident with the longitudinal axis of the stationary die. Therefore, the forces involved in forcing the plasticised material in to the extrusion channel may be balanced about the longitudinal axis of the die.

The multimaterial feed material supply may be cylindrical in shape and may comprise a first material in the shape of a cylinder, and a second material in the shape of a sleeve that is arranged around the cylindrical first material.

A third aspect relates to the use of a multimaterial extrudate produced by the method of any of the previously described aspect as an electrical conductor or as a medical implant.
- Figure 1: is an illustration of a known friction extrusion method for providing a single material extrudate;
- Figure 2: is an illustration of a first arrangement of material in a multimaterial extrudate;
- Figure 3: is an illustration of a second arrangement of material in a multimaterial extrudate.
- Figure 4: is an illustration of a non-homogeneous microstructure of extruded material.

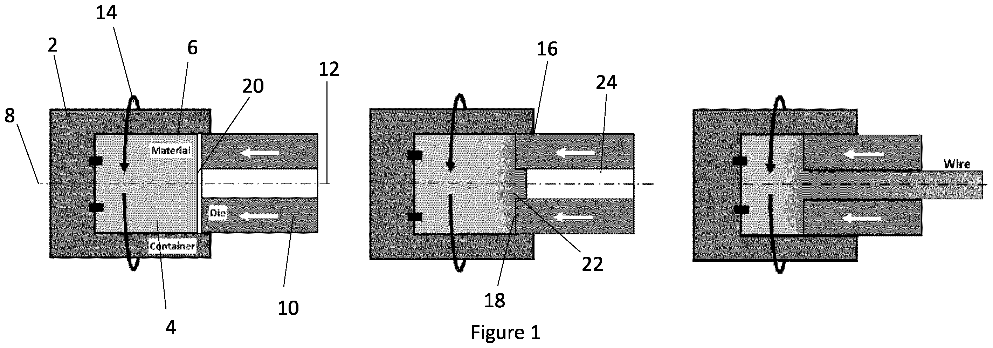

A known method of friction extrusion is illustrated in Figure 1, for the extrusion of a single-material extrudate.

Here, a container 2 comprises a supply of feed material 4 which comprises a volume of feed material. The container comprises a cavity 6 in which the supply of feed material 4 is located.

The container 2 comprises a rotation axis 8 about which it is rotated while being brought into contact with a die 10. The die 10 is stationary, and comprises longitudinal axis 12 extending along the length thereof.

As illustrated in each of the three steps of Figure 1, the longitudinal axis 12 of the die 10 is aligned with the rotation axis 8 of the container 2. The container 2 is then rotated about the rotation axis as is illustrated by arrow 14 such that the rotating supply of feed material 4 may be brought into contact with the die 10.

In order to enable the feed material supply 4 to be brought into contact with the die 10, the container 2 comprises an opening 16 that permits access to the cavity 6. The container 2 is a cylinder in this example, and the opening 16 is positioned on an axial face of the cylinder, and has a circular shape that is perpendicular and aligned with the rotation axis 8 such that rotation of the container 2 does not result in a change in shape of the opening 16 relative to the stationary die 10.

With the container 2 rotating either the stationary die 10 or the container, or both, are moved in the direction of the respective rotation axis and longitudinal axis 8, 12 until the rotational die 10 is brought into contact with the feed material 4. As illustrated in Figure 1, it is an axial surface 18 of the die 10 that is brought into contact with an engagement surface 20 of the feed material 4. The engagement surface 20 of the feed material 4 may be oriented perpendicular to the rotation axis 8 of the container 2 and may be flat.

Upon contact with the die 10, the engagement surface 20 heats up as a result of friction between the two, as is illustrated in the central illustration of Figure 1. The heating of the engagement surface 20 causes a top portion of the engagement surface to become plasticised. A force is applied between the die 10 and the feed material 4 in the container 2 such that the plasticised material is able to flow through an orifice 22 in the axial surface 18 of the die 10 and into an extrusion channel 24. As the plasticised material moves from being in the cavity 6 and into the channel 24, the die is able to move further into the cavity 6, where a further portion of the feed material 4 is exposed to the heat generated by the contact with the die 10. Once in the extrusion channel, the plasticised material may be permitted to cool so as to form an extrudate. By a further continuous relative movement of the container 2 towards the die 10 further plasticised material is pressed into the extrusion channel 24 so that a continuous process of forming the extrudate takes place.

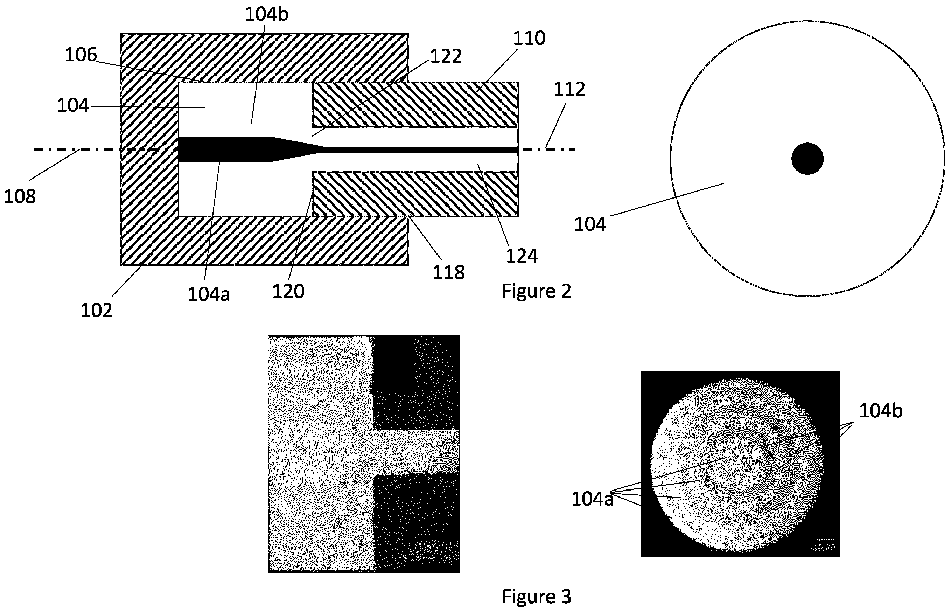

With reference to Figures 2 and 3, an embodiment of the method according to the present invention will be described. Here, some of the steps as illustrated in Figure 1, or are similar to as illustrated in Figure 1. For example, as can be seen in Figure 2, a container 102 is provided that comprises a cavity 106 in which a supply of feed material 104 is located. The container 102 comprises a rotation axis 108 about which it is configurable to rotate, while a die 110 is provided having a longitudinal axis 112. When carrying the method of the present invention these axes 108, 112 coincide. In this embodiment of the method of the invention the die 110 is a stationary die, in that it is rotationally stationary. However, it should be noted that translational movement of the die along the longitudinal axis 112 may be possible, and it is also conceivable that the container 102 remains rotationally stationary and the die 110 is rotated.

Here, the feed material 104 is a multimaterial feed material comprising a first material 104a and a second material 104b. The first material 104a is dissimilar to the second material 104b. The first and second material 104a, 104b may be polymers (e.g. plastics) or may be metallic materials, such as a metal alloy, or a metal. In some examples, the first material may be copper, while the second material may be aluminium. In another example, each of the first and second materials may be dissimilar alloys of aluminium.

A cross-section of the feed material 104 is illustrated on the right-hand side of Figure 2. Here, it can be seen that the feed material 104 has a circular cross-section (and is cylindrical in shape). The first material 104a has a cylindrical shape, while the second material 104b is in the shape of a sleeve that is arranged around the cylindrical first material 104a. The longitudinal axis of the container 108 is aligned with the centre (e.g. the longitudinal axis) of the cylindrical feed material 104 such that rotation of the container 102 about the longitudinal axis does not result in a changing cross-sectional shape of the feed material 104 as a result of rotation of the feed material 104 in the container relative to the die 110. Similarly, the arrangement of the first material 104a and the second material 104b is rotationally symmetrical about the rotation axis 108 of the container 102, and also about the longitudinal axis of the cylindrical feed material 104. This has the effect of meaning that when the feed material 104 is rotated, the arrangement of the first material 104a relative to the second material 104b does not change relative to the stationary die 110.

Regarding the geometry of the container 102 and the die 110, it should be noted that the container 102 may be or comprise any prismatic shape, such as a cylinder, but also a triangular, rectangular or polygonal prism may also suffice. Although not illustrated, a rotational device may be present in order to rotate the container 102 around the rotation axis 108. The shape of the container 102 may therefore be selected based on the most preferable shape for such a rotational device.

The cavity 106 in this case has a circular cross-section taken perpendicular to the rotation axis 108, and is generally cylindrical in shape. As previously described in relation to Figure 1, the container 102 comprises an opening 118 for accessing the cavity 106, and into which a feed material may be placed, as is illustrated in Figure 2. The feed material may be in the form of a solid block or blocks of feed material, in the form of chips or in the form of powdered material.

Figure 3 illustrated a feed material comprising a first and second material (which may be, for example, dissimilar aluminium alloys, copper and aluminium, or the like). As is illustrated in in the rightmost illustration of Figure 3, here the feed material 104 comprises a cylinder of a first material 104a that is surrounded by a sleeve of a second material 104b, which is then surrounded by a sleeve of the first material 104a and so on, in an alternating pattern. As such, it can be seen that the multimaterial feed material 104 may be or comprise two materials that are separated into a plurality of distinct volumes. Equally, it may be possible to have a multimaterial feed material 104 comprising more two (e.g. three, four or more) materials.

As is illustrated in Figure 2, the die 110 may be moved along its longitudinal axis 112 through the opening 118 in the container 102 to be brought into contact with the feed material 104 in the rotating container 102. As described in relation to Figure 1, relative rotational movement between the die 110 and an engagement surface 120 of the feed material 104 causes the engagement surface 120 and a portion of the feed material that is adjacent the engagement surface 120 to heat and become plasticised. A contact pressure is applied between the die 110 and the feed material 104 such that the plasticised feed material is caused to flow through an orifice 122 in the die 110 and into an extrusion channel 124. The flowing of the plasticised material towards and into the channel 124 may cause the engagement surface 120 between the supply material 104 and the die 110 to be a dynamic surface that is being replaced by non-plasticised material as the plasticised material flows away, and allows the die 110 to move further into the cavity 106.

Once in the extrusion channel 124, the material may be allowed to cool such that an extrudate is formed. Although the orifice 122 and/or the extrusion channel 124 may traditionally be cylindrical in shape, it should be noted that (for example as a result of the die 110 being rotationally stationary) any cross-sectional shape of extrusion channel 124 may be acceptable. For example, the orifice 122 and/or the extrusion channel 124 may have a triangular, square, rectangular, pentagonal or any other polygonal shape that may be chosen by the user.

As is illustrated in both Figures 2 and 3, the arrangement of the first and second materials 104a, 104b in the cross-section of the cavity 106 is the same as that in the cross-section of the extrudate, although with the dimensions reduced in the cross-section of the extrudate, so as to maintain the same or similar ratio of e.g. diameter of the first material relative to the diameter of the second material. The cross-section of the feed material 104 may therefore be a similar shape as compared to the cross-section of the extrudate. In particular, the ratio between the radial thickness of the two materials in the multimaterial feed material supply and in the extrudate is essentially equal.

According to the present invention, the geometry of the die 110 and the container 102 may be selected and combined with specific FE parameters, so as to minimise or prevent deformation of the arrangement of the materials in the multimaterial feed material 104 during the extrusion process. For example, it is known that a specific rotational speed and contact pressure between the die 110 and the feed material 104 provides reduced deformation (e.g. radial deformation) of the materials during the extrusion process, thereby resulting in a more consistent and predictable cross-section of the extrudate.

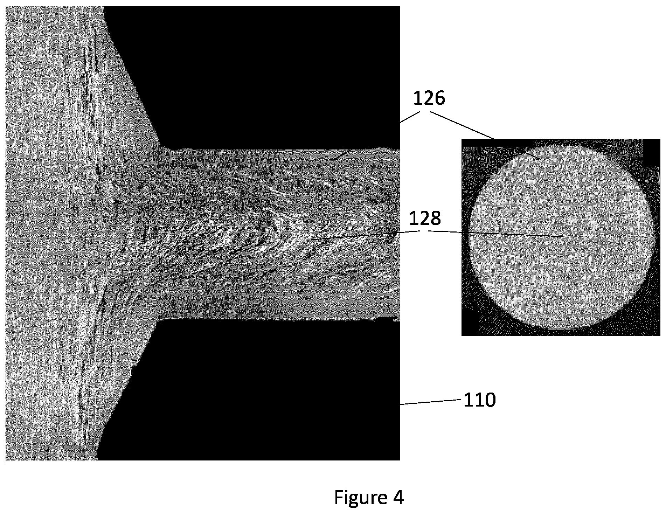

The effects of the parameters of friction extrusion can be seen in Figure 4. Here, the grain structure of the extrudate is shown, and it can be seen that a non-homogenous structure is present. In particular, the extrudate has a fine grain structure towards its edges and an elongated grain structure towards its centre. It has been discovered that maintaining a non-homogeneous grain structure, for example where the grain structure is fine towards the edges 126 and coarse/elongated toward the centre 128, strongly reduces the deformation in the radial direction of the feed material as a result of the extrusion process. With this being known, parameters may be selected so as to ensure such a distribution of grain structure.

In particular, with the method of the present invention control of the microstructure of the resulting multimaterial extrudate is obtained by varying the parameters of the process. The rotational speed of the relative rotation between the container 102 and the die 110, the speed of the relative movement of the container 102 towards the die 110, the axial pressure applied between the die 110 and the container 102, the thickness or diameter of the extrudate produced and the applied extrusion ratio may be adjusted such that tailored extrudates can be produced.

## Claims

1. An extrusion method for forming a length of multimaterial extrudate, the method comprising:
providing a die (no) comprising a longitudinal axis (112);
providing a container (102) comprising a multimaterial feed material supply (104) comprising at least two materials (104a, 104b),
the die (110) and the container (102) being configured such that the container (102) is rotatable relative to the die (no) about a rotation axis (108);
aligning the longitudinal axis (112) of the die (no) so as to be coincident with the rotation axis (108);
rotating the container (102) relative to the die (no) about the rotation axis (108);
effecting relative movement of the container (102) towards the die (no) so as to bring an axial surface of the die (no) into contact with a rotating engagement surface (120) of the supply of feed material (104);
generating heat at the interface between the axial surface of the die (110) and the rotating engagement surface (120) of the multimaterial feed material supply (104) so as to heat the at least two materials of the multimaterial feed material supply (104) by the application of a contact pressure between the axial surface of the die (110) and the rotating engagement surface (120) of the feed material supply (104) so as to generate friction therebetween;
pressing the heated multimaterial feed material supply (104) through an orifice (122) in the axial surface of the die (110) and into an extrusion channel (124) in the die (no) so as to form a length of multimaterial extrudate in the extrusion channel (124).

2. The extrusion method according to claim 1, comprising providing further relative movement of the container (102) in the direction towards the die (no) so as to force the heated multimaterial feed material supply (104) through the extrusion channel (124).

3. The extrusion method according to any preceding claim, wherein the extrusion channel (124) comprises an orifice (122) arranged in axial surface of the die (no) and
wherein at least the orifice (122) is located on the longitudinal axis (112) of the die (no) and preferably the extrusion channel (124) extends at least partially along the longitudinal axis (112).

4. The extrusion method according to any preceding claim, comprising providing the multimaterial feed material supply (104) in the container (102), and aligning the multimaterial feed material supply (104) with the rotation axis (108) such that the arrangement of at least two materials (104a, 104b) in the multimaterial feed material supply (104) is rotationally symmetrical about the rotation axis (108).

5. The extrusion method according to any preceding claim, comprising providing a container (102) comprising a multimaterial feed material supply comprising at least two metals and/or metal alloys.

6. The extrusion method according to any preceding claim, comprising providing a container (102) comprising a multimaterial feed material supply (104) comprising copper as a first material and aluminium as a second material.

7. The extrusion method according to any preceding claim, comprising rotating the container (102) relative to the die (no) about the rotation axis (108) at a rotational speed of at least 90 rpm, in particular, when the cylindrical cavity 106 in the container (102) has a cross section of 0.002 m².

8. The extrusion method according to any preceding claim, wherein the contact force for the generation of heat is at least 100 kN, preferably at least 150 kN, in particular, when the cylindrical cavity (106) in the container (102) has a cross section of 0.002 m².

9. The extrusion method according to any preceding claim, comprising plasticising a portion of the feed material supply (104) at the engagement surface (120) thereof by the generation of heat at the interface between the axial surface of the die (110) and the rotating engagement surface (120), and flowing the plasticised portion of the feed material supply (104) through the extrusion channel (124) to form a length of multimaterial extrudate.

10. The extrusion method according to any preceding claim, wherein the arrangement of the at least two materials (104a, 104b) in the cross-section of the formed length of multimaterial extrudate is the same as the arrangement of the at least two materials (104a, 104b) in the transverse cross-section of the multimaterial feed material supply (104) in the container (102), preferably wherein the ratio between the radial thickness of the two materials (104a, 104b) in the multimaterial feed material supply (104) and in the multimaterial extrudate is essentially equal.

11. The extrusion method according to any preceding claim, comprising providing a cylindrical container (102) comprising a multimaterial feed material supply (104) located in a cylindrical cavity (106), and moving the container (102) relatively towards the die (no) such that the die (110) is positioned at least partially inside the cylindrical cavity (106).

12. The extrusion method according to claim 11, wherein the engagement surface of the die (no) is substantially circular in cross-section and the diameter of the cylindrical cavity (106) is the same as the diameter of the outer surface of the die (no) adjacent to the engagement surface.

13. An apparatus for providing a length of multimaterial extrudate, comprising:
a die comprising a longitudinal axis and an axial surface comprising an orifice to an extrusion channel therein;
a container comprising a multimaterial feed material supply comprising at least two materials, the container being rotatable rotating relative to the die about a rotation axis;
the longitudinal axis of the die and the rotation axis of the container being aligned so as to be coincident;
wherein the container and the die (no) are configured such that during relative rotation of the container (102) and the die (no) about the rotation axis (108), and at least one of the die (110) and the container (102) are movable along the respective longitudinal axis (112) and rotation axis (108) so as to permit the axial surface of the die (110) to be brought into contact with an engagement surface (120) of the feed material supply (104);
wherein relative rotation of the container (102) causes rotation of the engagement surface (120), such that contact with the axial surface of the die (no) causes heating of the engagement surface (120), and the orifice (122) in the axial surface of the die (no) is configured to permit flow of heated multimaterial feed material supply (104) therethrough and into the extrusion channel (124).

14. The apparatus of claim 13, wherein the extrusion channel (124) is parallel and coincident with the longitudinal axis (112) of the stationary die (110).

15. The apparatus of claim 13 or 14, wherein the multimaterial feed material supply (104) is cylindrical in shape and comprises a first material (104a) in the shape of a cylinder, and a second material (104b) in the shape of a sleeve that is arranged around the cylindrical first material (104a).

16. The use of a multimaterial extrudate produced by the method of any of claims 1 to 12 as an electrical conductor or as a medical implant.
